# EUROPEAN PATENT APPLICATION

(11) **EP 2 587 796 A1**
(43) Date of publication of application: **01.05.2013**
(21) Application number: 12188274.0
(22) Date of filing: 12.10.2012
(51) Int. Cl.: H04N 5/376, H04N 5/343

(54) **Scanning circuit, solid-state image sensor, and camera**

(30) Priority: 28.10.2011 JP 2011237961
(71) Applicant: Canon Kabushiki Kaisha, Tokyo 146-8501 (JP)
(72) Inventor: Ogura, Masanori, Tokyo, Tokyo 146-8501 (JP); Maeda, Kouji, Tokyo, Tokyo 146-8501 (JP); Kobayashi, Hideo, Tokyo, Tokyo 146-8501 (JP)
(74) Representative: TBK

(57) **Abstract**

A scanning circuit includes a shift register configured by connecting a plurality of unit circuits, and a control unit which controls the shift register. In a certain mode, the control unit supplies, to a control terminal of a unit circuit of at least one of a plurality of groups each constituted by the unit circuit, a logic level which operates the unit circuit of the at least one group as a buffer, and supplies the clock signal to the control terminals of unit circuits of other groups, thereby operating each of the unit circuits of the other groups to transfer a pulse signal, and outputting pulse signals from the unit circuit of the at least one group and the unit circuit arranged at the input side of it in one time period.

## Description

### BACKGROUND OF THE INVENTION

### Field of the Invention

The present invention relates to a scanning circuit, solid-state image sensor, and camera.

### Description of the Related Art

A CMOS image sensor or CCD image sensor includes a pixel including a photoelectric converter, and a peripheral circuit including a readout circuit for reading out a signal photoelectrically converted by the pixel. The function of the readout circuit is advanced in particularly the CMOS image sensor. For example, there is a readout circuit capable of switching the resolutions or readout speeds.

Japanese Patent Laid-Open No. 2004-304688 has disclosed a solid-state image sensor including a scanning circuit including a plurality of unit registers, and a selecting circuit for switching the connecting path of input/output signals of the plurality of unit registers to a normal operation mode or reduction operation mode. In the normal operation mode, the selecting circuit connects the plurality of unit registers in series. In the reduction operation mode, the selecting circuit connects the plurality of unit registers by connecting paths including a jump connection by which unit registers separated by one or more registers are connected. In the reduction operation mode, output signals from a plurality of unit registers simultaneously become active, so signals of a plurality of pixels are mixed.

The arrangement described in Japanese Patent Laid-Open No. 2004-304688 requires the connecting paths including the jump connection and switches, so the area unavoidably increases. Also, when the number of pixels as targets of signal mixing increases in the arrangement described in Japanese Patent Laid-Open No. 2004-304688, the numbers of connecting paths and switches become enormous, and this complicates the arrangement.

### SUMMARY OF THE INVENTION

The present invention provides a technique advantageous in simplifying an arrangement and diversifying modes.

The first aspect of the present invention provides a scanning circuit as specified in claims 1 to 5.

The second aspect of the present invention provides a solid-state image sensor as specified in claim 6.

The third aspect of the present invention provides a camera as specified in claim 7.

Further features of the present invention will become apparent from the following description of exemplary embodiments (with reference to the attached drawings).

### BRIEF DESCRIPTION OF THE DRAWINGS

Fig. 1 is an exemplary view showing the arrangement of a solid-state image sensor of an embodiment of the present invention;

Fig. 2 is a view showing the arrangement of a horizontal scanning circuit of the first embodiment of the present invention;

Fig. 3 is a timing chart when the horizontal scanning circuit of the first embodiment of the present invention is operated by a first mode (full-pixel mode);

Fig. 4 is a timing chart when the horizontal scanning circuit of the first embodiment of the present invention is operated by a 1/2 reduction mode as a sub mode of a second mode (reduction mode);

Fig. 5 is a timing chart when the horizontal scanning circuit of the first embodiment of the present invention is operated by a 1/3 reduction mode as a sub mode of the second mode (reduction mode);

Fig. 6 is a view showing the arrangement of a horizontal scanning circuit of the second embodiment of the present invention;

Fig. 7 is a timing chart when the horizontal scanning circuit of the second embodiment of the present invention is operated by the 1/2 reduction mode as a sub mode of the second mode (reduction mode);

Fig. 8 is a timing chart when the horizontal scanning circuit of the second embodiment of the present invention is operated by the 1/3 reduction mode as a sub mode of the second mode (reduction mode);

Fig. 9 is a view showing the arrangement of a horizontal scanning circuit of the third embodiment of the present invention;

Fig. 10 is a timing chart when the horizontal scanning circuit of the third embodiment of the present invention is operated by the 1/2 reduction mode as a sub mode of the second mode (reduction mode);

Fig. 11 is a timing chart when the horizontal scanning circuit of the third embodiment of the present invention is operated by the 1/3 reduction mode as a sub mode of the second mode (reduction mode);

Fig. 12 is a timing chart when the horizontal scanning circuit of the second embodiment of the present invention is operated by the 1/2 reduction mode as a sub mode of the second mode (reduction mode);

Fig. 13 is a timing chart when the horizontal scanning circuit of the second embodiment of the present invention is operated by the 1/3 reduction mode as a sub mode of the second mode (reduction mode); and

Fig. 14 is a view showing a configuration example of a control unit in the solid-state image sensor of the embodiment of the present invention.

### DESCRIPTION OF THE EMBODIMENTS

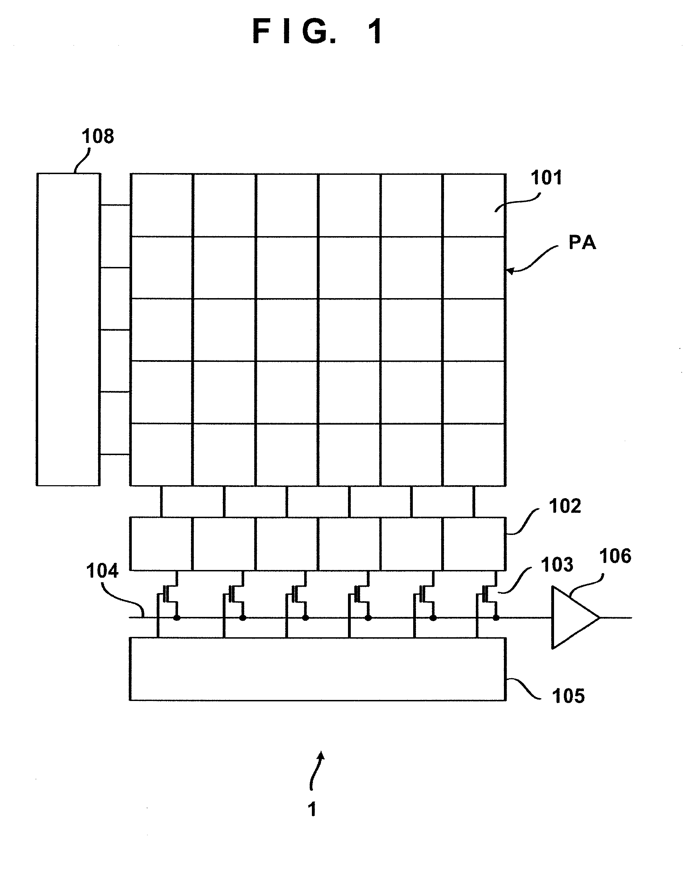

A solid-state image sensor of an embodiment of the present invention will be explained below with reference to Fig. 1. A solid-state image sensor 1 includes a pixel array PA, vertical scanning circuit 108, and horizontal scanning circuit 105. The pixel array PA is formed by arranging a plurality of pixels 101 so as to configure a plurality of rows and a plurality of columns. The vertical scanning circuit 108 includes a scanning circuit for selecting a row as a target of signal read from the plurality of rows in the pixel array PA. The horizontal scanning circuit 105 includes a scanning circuit for selecting a column as a target of signal read from the plurality of columns in the pixel array PA. The solid-state image sensor 1 can further include a plurality of column readout circuits 102, a plurality of column selecting switches 103, a common output line 104, and an amplifier circuit 106. Each column readout circuit 102 reads out, through a column signal line, a signal from the pixel 101 in a column corresponding to a row selected from the plurality of rows in the pixel array PA by the vertical scanning circuit 108. Each column selecting switch 103 is turned on when the logic level of a corresponding one of selecting signals 107 (107a to 107f) output from the horizontal scanning circuit 105 changes to an active level, and connects a corresponding column readout circuit and the common output line 104. The amplifier circuit 106 amplifies a signal transmitted to the common output line 104 and outputs the amplified signal.

A scanning circuit of the present invention is applicable to, for example, the horizontal scanning circuit 105 and vertical scanning circuit 108. When the scanning circuit of the present invention is applied to the horizontal scanning circuit 105, for example, an output signal from the scanning circuit can be supplied to the column selecting switch 103. When the scanning circuit of the present invention is applied to the vertical scanning circuit 108, for example, a transfer signal, reset signal, and row selecting signal can be generated based on an output signal from the scanning circuit, and supplied to pixels on each row. Each pixel can include a photoelectric converter, floating diffusion, transfer transistor, amplifier transistor, reset transistor, and row selecting transistor. The transfer transistor transfers charge accumulated in the photoelectric converter to the floating diffusion in accordance with the transfer signal. The amplifier transistor outputs a signal corresponding to the potential of the floating diffusion to the column signal line. The reset transistor resets the potential of the floating diffusion in accordance with the reset signal. The row selecting transistor becomes active in accordance with the row selecting signal, and causes the amplifier transistor to drive the column signal line.

An example in which the scanning circuit of the present invention is applied to the horizontal scanning circuit 105 will be explained below as a practical example. The solid-state image sensor 1 or horizontal scanning circuit 105 includes a first mode and second mode as operation modes. The first mode is a mode in which the solid-state image sensor 1 outputs signals from a plurality of pixels. The second mode is a mode in which the solid-state image sensor 1 outputs one signal for every plurality of pixels. The first mode can be a mode in which, for example, the solid-state image sensor 1 outputs signals from all the pixels in the pixel array PA. The first mode can be called, for example, a full-pixel mode. The second mode can be a mode in which, for example, each signal output from the solid-state image sensor 1 is obtained from signals of a plurality of pixels. Examples of the method by which each output signal from the solid-state image sensor 1 is obtained from signals of a plurality of pixels are a method of synthesizing (for example, adding or averaging) signals of a plurality of pixels, and a method of selecting one signal from signals of a plurality of pixels (that is, a method of excluding other pixels).

The second mode can be called, for example, a reduction mode. An example in which the second mode includes a 1/2 reduction mode and 1/3 reduction mode as sub modes will be explained below. The 1/2 reduction mode is a mode in which each output signal from the solid-state image sensor 1 is obtained from signals of two pixels. The 1/3 reduction mode is a mode in which each output signal from the solid-state image sensor 1 is obtained from signals of three pixels.

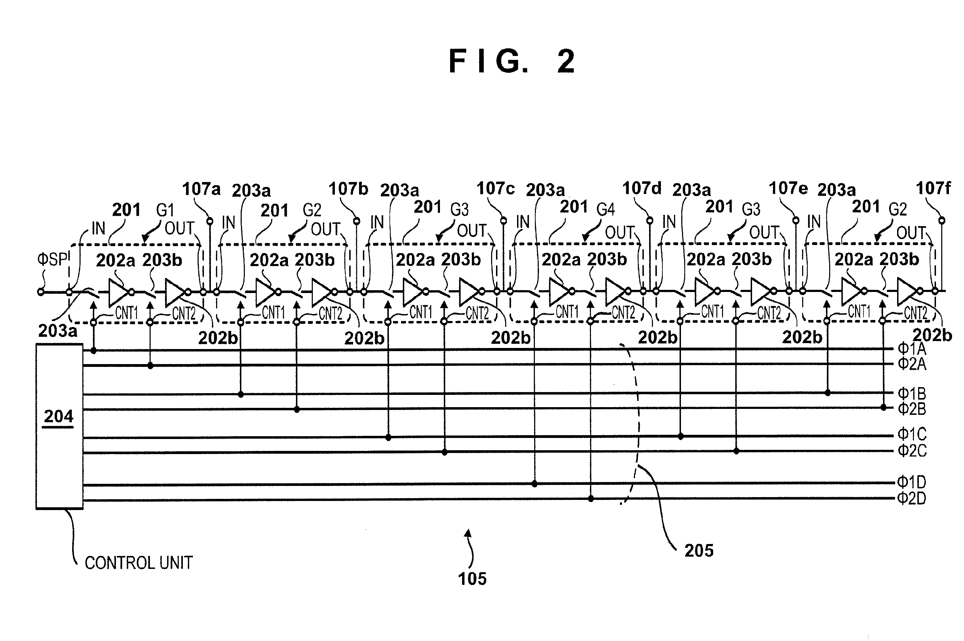

Fig. 2 shows the arrangement of the horizontal scanning circuit 105 of the first embodiment of the present invention. The horizontal scanning circuit 105 of the first embodiment supports the first mode and second mode (the 1/2 reduction mode and 1/3 reduction mode). The horizontal scanning circuit 105 includes a shift register SR configured by connecting a plurality of unit circuits 201 in series, and a control unit 204 for controlling the shift register SR. Each unit circuit 201 includes an input terminal IN for receiving a pulse signal, a control terminal (first control terminal) CNT1 for receiving a first control signal, a control terminal (second control terminal) CNT2 for receiving a second control signal, and an output terminal OUT for outputting a pulse signal. Each unit circuit 201 also includes a first inverter 202a, second inverter 202b, first switch 203a, and second switch 203b. The first switch 203a is arranged between the input terminal IN and the input terminal of the first inverter 202a, and the second switch 203b is arranged between the output terminal of the first inverter 202a and the input terminal of the second inverter 202b. The output terminal of the second inverter 202b can be the output terminal of the unit circuit 201.

The plurality of unit circuits 201 are divided into a plurality of groups. In the example shown in Fig. 2, the plurality of unit circuits 201 are divided into first, second, third, and fourth groups G1, G2, G3, and G4. For example, the scanning circuit 105 is configured by repetitively arranging the unit circuits 201 of the first, second, third, and fourth groups. A first control signal φ1A and second control signal φ2A are respectively supplied to the control terminals CNT1 and CNT2 of the unit circuits 201 of the first group G1 through control signal lines 205. A first control signal φ1B and second control signal φ2B are respectively supplied to the control terminals CNT1 and CNT2 of the unit circuits 201 of the second group G2 through control signal lines 205. A first control signal φ1C and second control signal φ2C are respectively supplied to the control terminals CNT1 and CNT2 of the unit circuits 201 of the third group G3 through control signal lines 205. A first control signal φ1D and second control signal φ2D are respectively supplied to the control terminals CNT1 and CNT2 of the unit circuits 201 of the fourth group G4 through control signal lines 205.

In each unit circuit 201, the first control terminal CNT1 and second control terminal CNT2 are respectively connected to the first switch 203a and second switch 203b. The first switch 203a is turned on when the first control signal to be supplied to the first control terminal CNT1 changes to the active level, and the second switch 203b is turned on when the second control signal to be supplied to the second control terminal CNT2 changes to the active level. When clock signals (for example, φ1A and φ2A) having opposite phases are supplied as control signals to the control terminals CNT1 and CNT2, each unit circuit 201 outputs a pulse signal supplied to the input terminal IN to the output terminal OUT in response to the clock signals. This is one shift operation in the shift register SR. When a logic level (that is, the active level) for turning on the switches 203a and 203b is supplied as control signals to the control terminals CNT1 and CNT2, each unit circuit 201 functions as a buffer.

In the first mode, the control unit 204 supplies clock signals to the control terminals CNT1 and CNT2 of each unit circuit 201 in the plurality of groups G1, G2, G3, and G4, thereby operating the plurality of unit circuits 201 so as to shift a pulse signal in response to the clock signals. That is, in the first mode, the control unit 204 operates the plurality of unit circuits 201 so as to shift a start pulse φSP to be supplied to the first unit circuit 201 in response to the clock signals.

In the second mode, the control unit 204 supplies a logic level for operating the unit circuits 201 of at least one of the plurality of groups G1, G2, G3, and G4 as a buffer, to the control terminals CNT1 and CNT2 of the unit circuits 201 of the at least one group. Also, in the second mode, the control unit 204 supplies clock signals to the control terminals IN of the unit circuits 201 of other groups of the plurality of groups. Thus, the control unit 204 operates each of the unit circuits 201 of the other groups to transfer a pulse signal output from the output terminal OUT of the unit circuit 201 arranged at an input side of each of the unit circuits 201 of the other groups to the input terminal IN of the unit circuit 201 arranged at an output side of each of the unit circuits 201 of the other groups, in response to the clock signals. In the second mode, therefore, the unit circuits 201 of the at least one group and the unit circuits 201 arranged at the input side of the at least one group output pulse signals, in one time period.

This embodiment can implement a plurality of modes by simply configuring the shift register SR by using the plurality of unit circuits 201, and improving control signals to be supplied to the shift register SR. Accordingly, the embodiment provides a horizontal scanning circuit or scanning circuit advantageous in simplifying a configuration and diversifying modes.

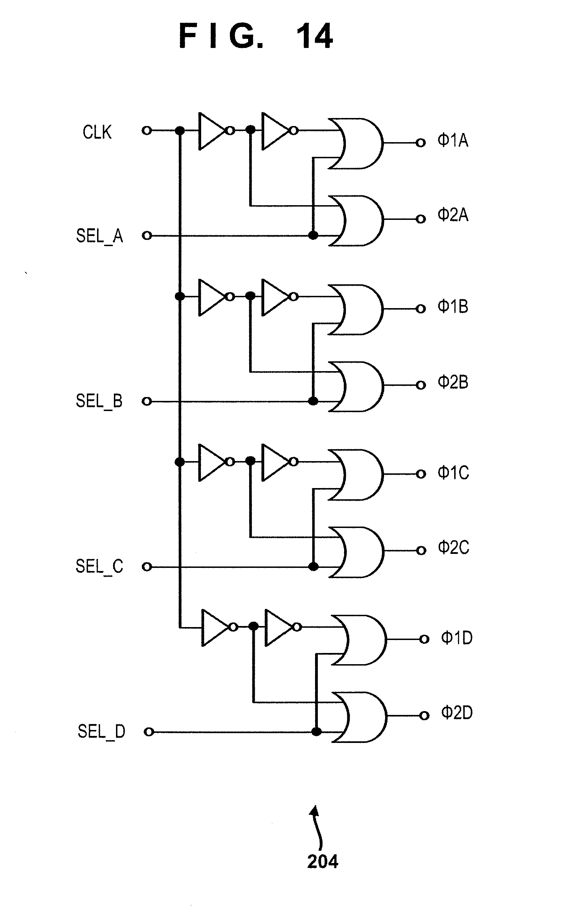

Fig. 14 shows a practical configuration example of the control unit 204. The control signals φ1A, φ2A, φ1B, φ2B, φ1C, φ2C, φ1D, and φ2D are generated by using a clock signal CLK.

In the first mode,
clock signals having opposite phases are generated as the control signals φ1A and φ2A,
clock signals having opposite phases are generated as the control signals φ1B and φ2B,
clock signals having opposite phases are generated as the control signals φ1C and φ2C, and
clock signals having opposite phases are generated as the control signals φ1D and φ2D.

In the second mode, at least one of a pair of the control signals φ1A and φ2A, a pair of the control signals φ1B and φ2B, a pair of the control signals φ1C and φ2C, and a pair of the control signals φ1D and φ2D are controlled to a logic level that causes the unit circuit 201 to function as a buffer. In the second mode, other pairs of the pair of the control signals φ1A and φ2A, the pair of the control signals φ1B and φ2B, the pair of the control signals φ1C and φ2C, and the pair of the control signals φ1D and φ2D are clock signals having opposite phases as in the first mode.

For example, when a control system in an image sensing system incorporating the solid-state image sensor 1 sets a mode selecting signal SEL_B at High level, the control signals φ1B and φ2B change to a logic level (in this case, High level) that operates the unit circuit 201, to which these control signals are supplied, as a buffer. Similarly, when a mode selecting signal SEL_C is set at High level, the control signals φ1C and φ2C change to a logic level (in this case, High level) that operates the unit circuit 201, to which these control signals are supplied, as a buffer. Likewise, when a mode selecting signal SEL_D is set at High level, the control signals φ1D and φ2D change to a logic level (in this case, High level) that operates the unit circuit 201, to which these control signals are supplied, as a buffer. Analogously, when a mode selecting signal SEL_A is set at High level, the control signals φ1A and φ2A change to a logic level (in this case, High level) that operates the unit circuit 201, to which these control signals are supplied, as a buffer.

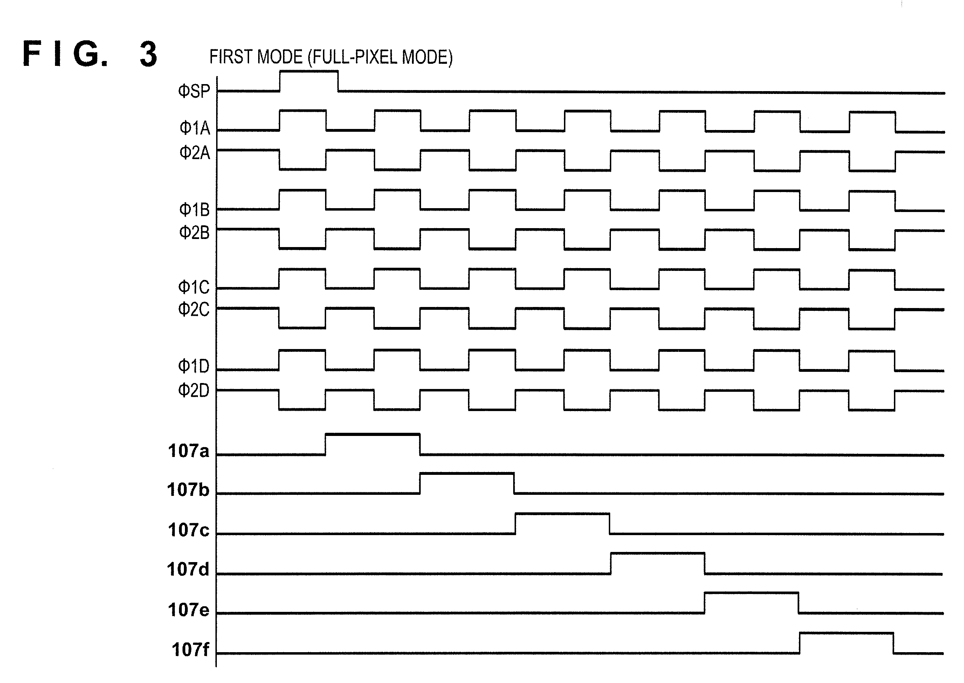

Fig. 3 is a timing chart when the horizontal scanning circuit 105 shown in Fig. 2 is operated in the first mode (full-pixel mode). In the first mode, the horizontal scanning circuit 105 operates as a simple shift register that shifts the start pulse φSP in synchronism with clock signals. The control signals φ1A and φ2A output from the control unit 204 to the control signal lines 205 are clock signals having opposite phases. This similarly applies to the pair of the control signals φ1B and φ2B, the pair of the control signals φ1C and φ2C, and the pair of the control signals φ1D and φ2D. φ1A, φ1B, φ1C, and φ1D simultaneously transit from High level to Low level, and simultaneously transit from Low level to High level. Likewise, φ2A, φ2B, φ2C, and φ2D simultaneously transit from High level to Low level, and simultaneously transit from Low level to High level. The first switch 203a is turned on when the first control signals φ1A, φ1B, φ1C, and φ1D are at High level, and the second switch 203b is turned on when the second control signals φ2A, φ2B, φ2C, and φ2D are at High level. The selecting signals 107a to 107f output from consecutive unit circuits 201, that is, selecting signals output from the shift register SR sequentially change to the active level in synchronism with φ2A, φ2B, φ2C, and φ2D. In this case, signals read out by the plurality of column readout circuits 102 are sequentially output to the common output line 104. Consequently, signals of all pixels (pixels in all columns and rows) are output from the solid-state image sensor 1.

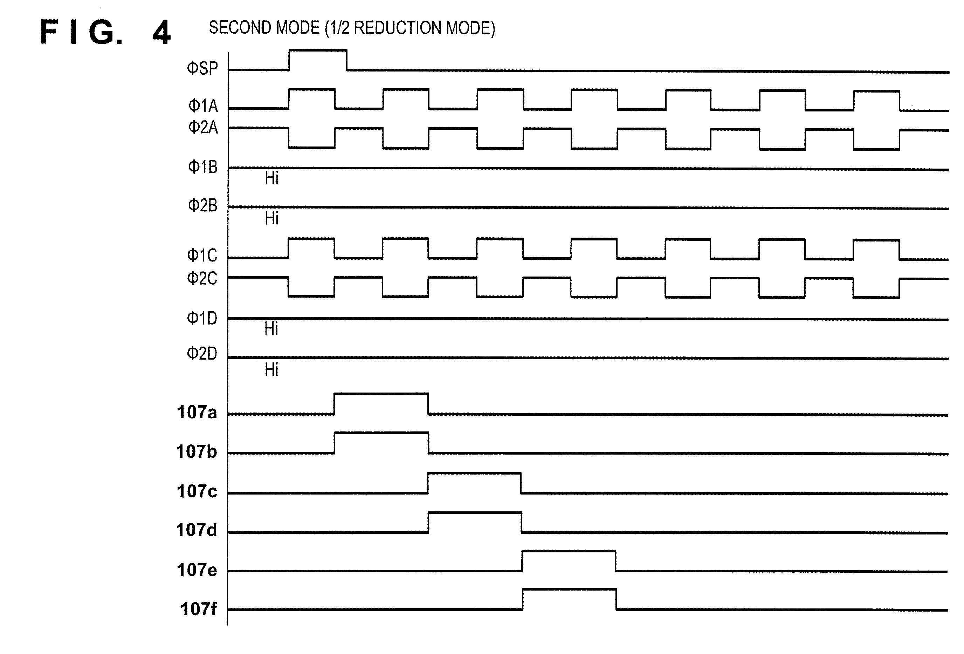

Fig. 4 is a timing chart when the horizontal scanning circuit 105 shown in Fig. 2 is operated in the 1/2 reduction mode as a sub mode of the second mode (reduction mode). In the 1/2 reduction mode, the horizontal scanning circuit 105 operates to select two columns in one cycle of the clock signal CLK. The logic levels of the control signals φ1B, φ2B, φ1D, and φ2D output from the control unit 204 to the control signal lines 205 are fixed to High level. In this case, the unit circuits 201 to which the control signals φ1B, φ2B, φ1D, and φ2D are supplied function as buffers configured by the two inverters 202a and 202b. Consequently, the selecting signal 107b becomes a signal having a delay caused by the inverters 202a and 202b and switches 203a and 203b with respect to the selecting signal 107a, but the selecting signals 107a and 107b transit almost simultaneously. This similarly applies to the relationship between the selecting signals 107c and 107d, and the relationship between the selecting signals 107e and 107f. In the 1/2 reduction mode, two column readout circuits 102 are connected to the common output line 104 at once, so signals of two pixels are synthesized (added or averaged). Accordingly, the number of horizontal pixels in an output image from the solid-state image sensor 1 is reduced to 1/2.

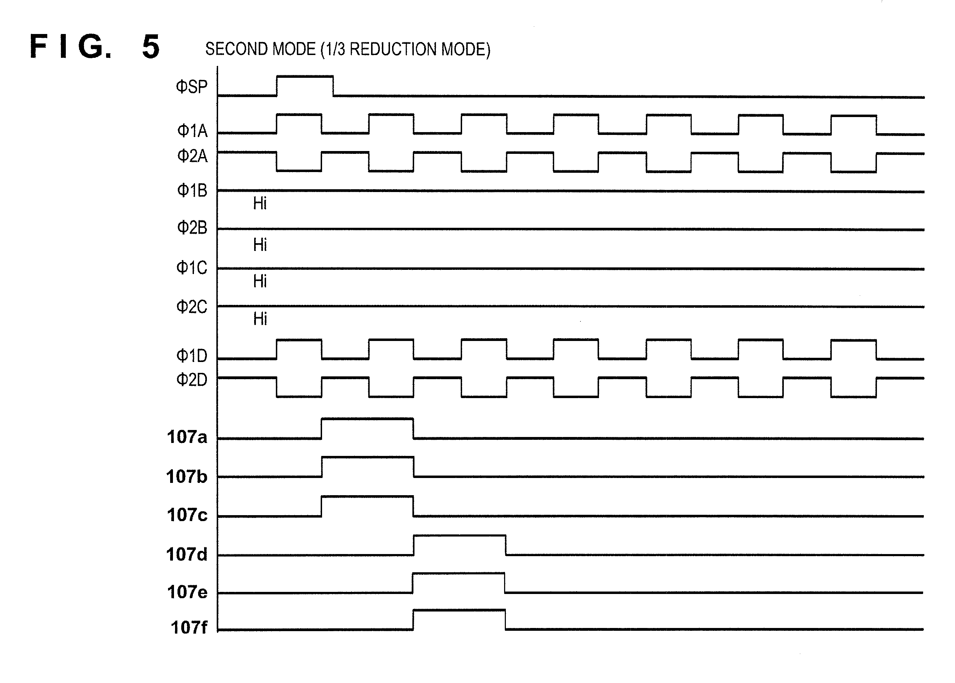

Fig. 5 is a timing chart when the horizontal scanning circuit 105 shown in Fig. 2 is operated in the 1/3 reduction mode as a sub mode of the second mode (reduction mode). In the 1/3 reduction mode, the horizontal scanning circuit 105 operates to select three columns in one cycle of the clock signal CLK. The logic levels of the control signals φ1B, φ2B, φ1C, and φ2C output from the control unit 204 to the control signal lines 205 are fixed to High level. In this case, the unit circuit 201 to which the control signals φ1B and φ2B are supplied and the unit circuit 201 to which the control signals φ1C and φ2C are supplied function as buffers configured by the two inverters 202a and 202b. Consequently, the selecting signal 107b becomes a signal having a delay caused by the inverters 202a and 202b and switches 203a and 203b with respect to the selecting signal 107a. Also, the selecting signal 107c becomes a signal having a delay caused by the inverters 202a and 202b and switches 203a and 203b with respect to the selecting signal 107b. However, these delays are slight, and the selecting signals 107a, 107b, and 107c transit almost simultaneously. This similarly applies to the relationship between the selecting signals 107d, 107e, and 107f. In the 1/3 reduction mode, three column readout circuits 102 are connected to the common output line 104 at once, so signals of three pixels are synthesized (added or averaged). Accordingly, the number of horizontal pixels in an output image from the solid-state image sensor 1 is reduced to 1/3.

Although Fig. 2 of Japanese Patent Laid-Open No. 2004-304688 omits control signals for controlling unit registers, at least two control signals are necessary for one unit register. On the other hand, in the first embodiment, the switches 203a and 203b forming the unit circuit 201 are operated as registers or buffers synchronized with clock signals by changing the control signals in accordance with a mode. This obviates the need for a connecting path including a jump connection and a switch as described in Japanese Patent Laid-Open No. 2004-304688.

Also, in the first embodiment, modes can be diversified with a simple arrangement by controlling the control signals φ1A, φ2A, φ1B, φ2B, φ1C, φ2C, φ1D, and φ2D in accordance with the full-pixel mode, 1/2 reduction mode, or 1/3 reduction mode. Since there is a strong demand for selectively using a plurality of image sizes and a plurality of frame rates in an image sensing system, the first embodiment is useful for a demand like this.

Although the control signals φ1B, φ2B, φ1D, and φ2D are set at High level in the 1/2 reduction mode in the above explanation, the control signals φ1A, φ2A, φ1C, and φ2C may also be set at High level. In this embodiment, the unit circuits 201 forming the horizontal scanning circuit 105 are divided into groups 1, 2, 3, and 4, and four corresponding pairs of control signal lines 205 are formed. However, when the unit circuits 201 are divided into groups 1, 2, 3, 4, 5, and 6 and six pairs of control signal lines 205 are formed, many second modes such as 1/2, 1/3, 1/4, 1/5, and 1/6 reduction modes can be implemented by controlling these control signal lines.

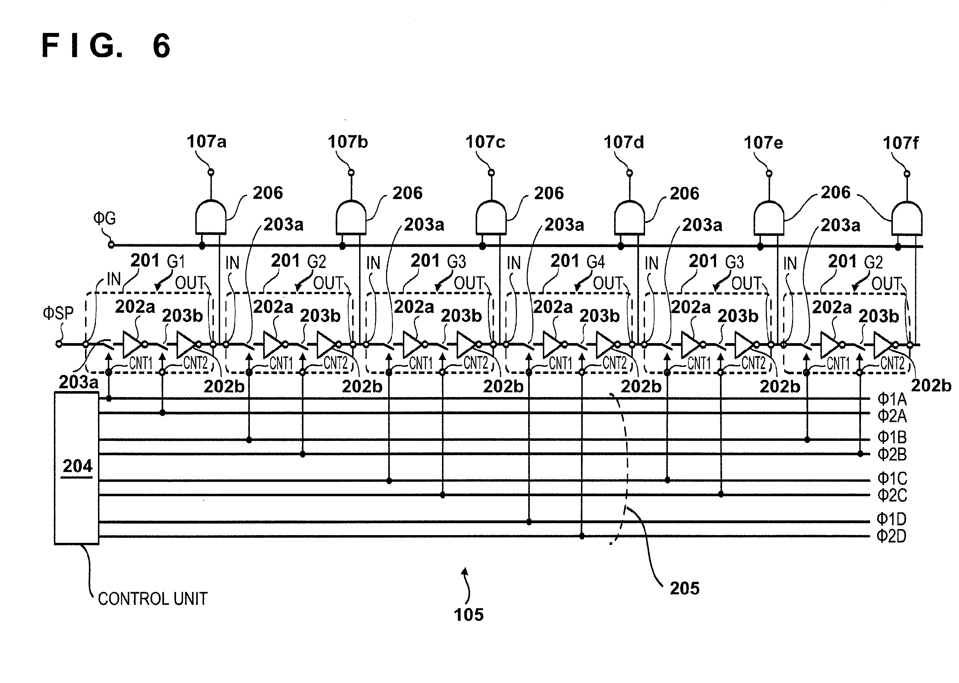

The second embodiment of the present invention will be explained below. Note that items not mentioned in the second embodiment can follow those described in the first embodiment. Fig. 6 shows the arrangement of a horizontal scanning circuit 105 of the second embodiment of the present invention. Note that an example in which the scanning circuit of the present invention is applied to the horizontal scanning circuit 105 will be explained below, but the scanning circuit of the present invention is also applicable to a vertical scanning circuit 108.

In the 1/2 reduction mode of the first embodiment, there is a slight difference between the transition timings in each of the set of the selecting signals 107a and 107b, the set of the selecting signals 107c and 107d, and the set of the selecting signals 107e and 107f. Similarly, in the 1/3 mode of the first embodiment, there is a slight difference between the transition timings in each of the set of the selecting signals 107a, 107b, and 107c and the set of the selecting signals 107d, 107e, and 107f. The second embodiment is useful when the difference between the transition timings like this is unallowable.

The horizontal scanning circuit 105 of the second embodiment includes pulse-width limiting circuits 206 for limiting the active time period of a pulse signal output from each of a plurality of unit circuits 201 to a time period shorter than one cycle of a clock signal CLK. The pulse-width limiting circuit 206 can be formed by a gate circuit, for example, an AND gate for shaping a pulse signal output from an output terminal OUT of the unit circuit 201. In the example shown in Fig. 6, the pulse-width limiting circuit 206 is formed by an AND gate having two input terminals. A shaping signal φG is supplied to one input terminal of the AND gate, and the output terminal OUT of the unit circuit 201 is connected to its other input terminal. The shaping signal φG has an active time period shorter than one cycle of the clock signal CLK (or a clock signal generated as a control signal based on the clock signal CLK). The active time period of a pulse signal output from the output terminal OUT of the unit circuit 201 is limited by the active time period of the shaping signal φG.

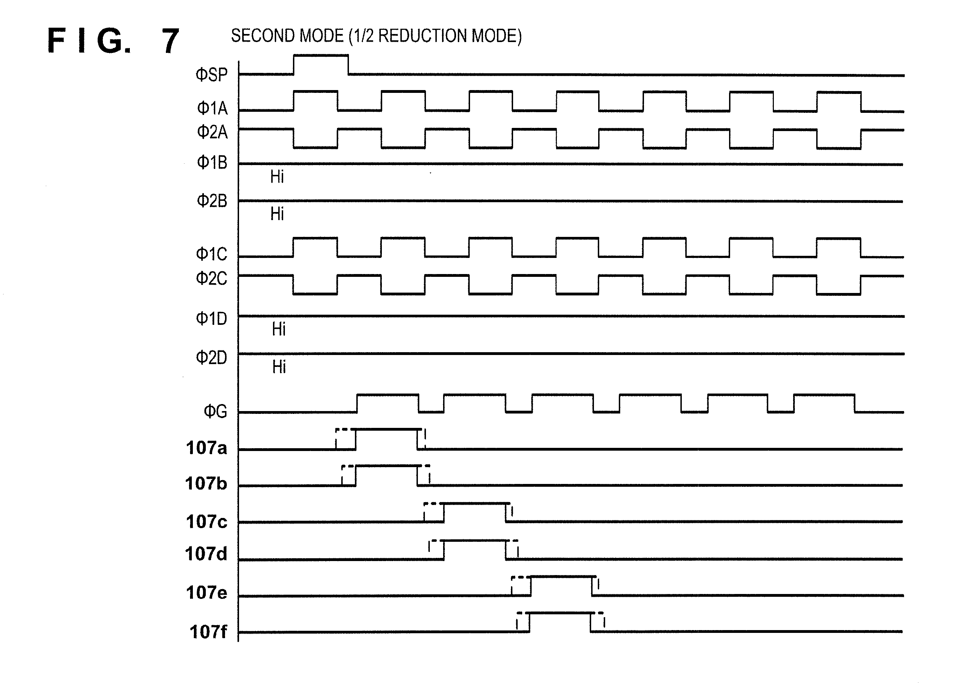

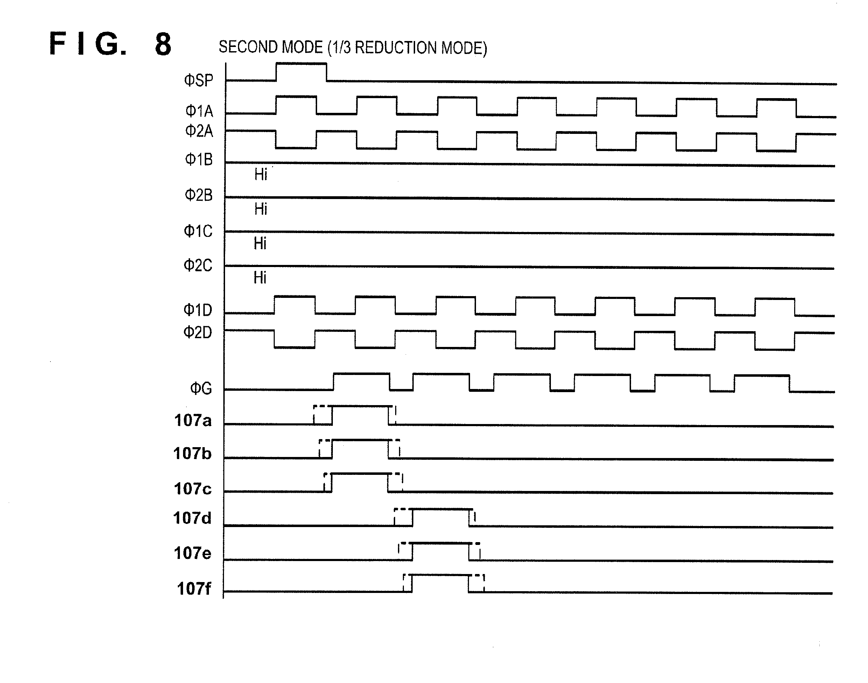

Fig. 7 is a timing chart when the horizontal scanning circuit 105 shown in Fig. 6 is operated in a 1/2 reduction mode as a sub mode of a second mode (reduction mode). Selecting signals 107a and 107b output from the unit circuits 201 output via the pulse-width limiting circuits 206 simultaneously transit. This similarly applies to the relationship between selecting signals 107c and 107d, and the relationship between selecting signals 107e and 107f. Referring to Fig. 7, the broken lines indicate an output signal when the unit circuit 201 has a large delay in the horizontal scanning circuit 105 shown in Fig. 6. Fig. 8 is a timing chart when the horizontal scanning circuit 105 shown in Fig. 6 is operated in a 1/3 reduction mode as a sub mode of the second mode (reduction mode).

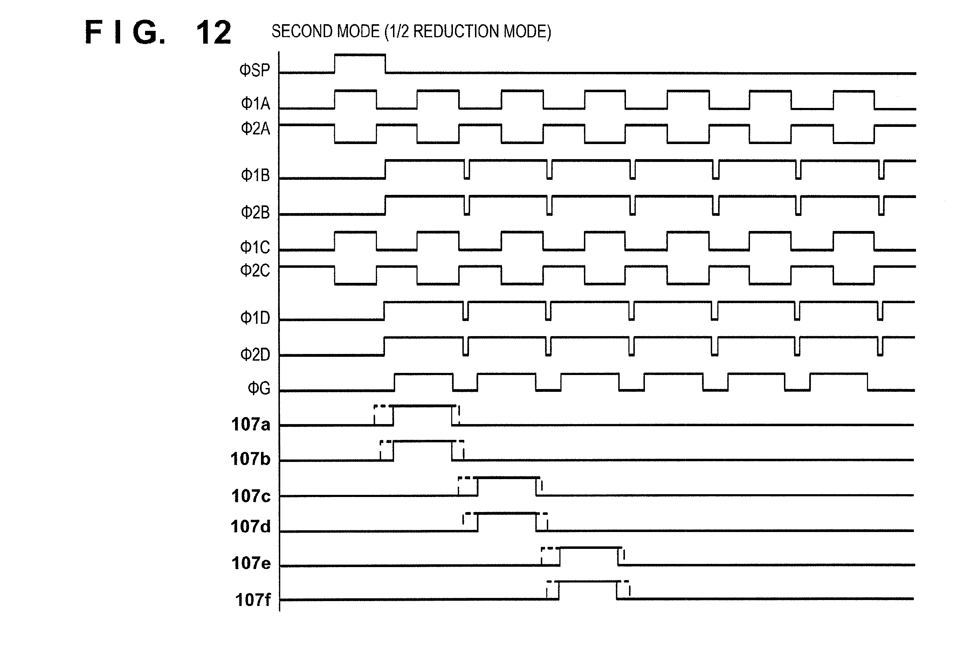

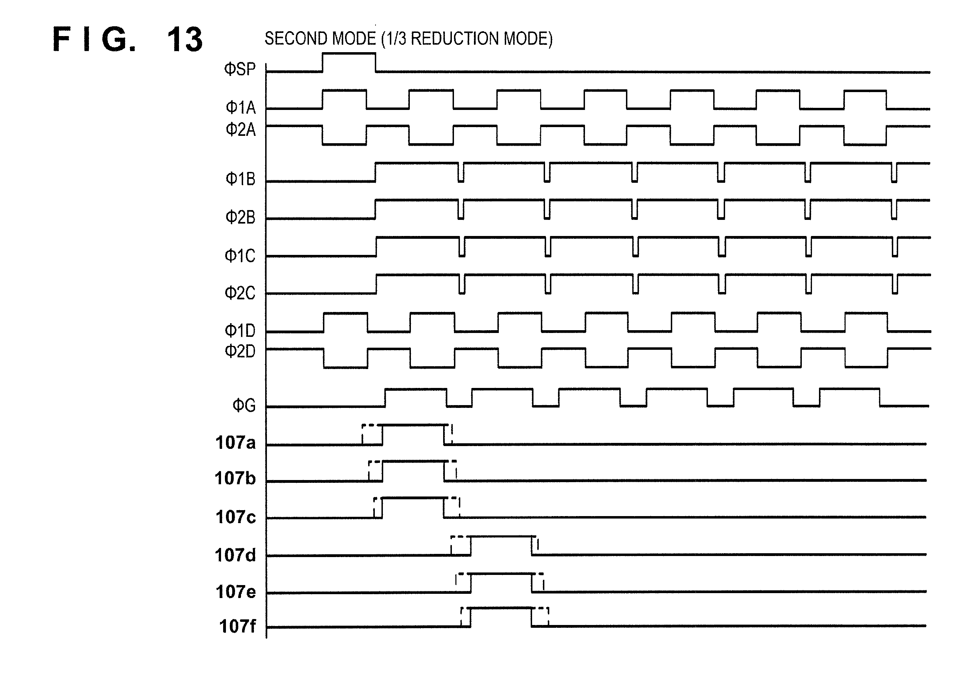

In the 1/2 reduction mode, the logic level of control signals φ1B and φ2B need not always be set at active level, and may also be set at active level in only a time period during which the unit circuits 201 of a second group G2 must function as buffers, as shown in Fig. 12. A time period during which the unit circuits 201 of the second group G2 and a fourth group G4 must function as buffers is a time period including the transition timing of the clock signal CLK but shorter than one cycle of the clock signal CLK. The logic level of the control signals φ1B and φ2B and control signals φ1C and φ2C need not always be set at active level in the 1/3 reduction mode as well. As shown in Fig. 13, the logic level of these control signals may also be set at active level in only a time period during which the unit circuits 201 of the second group G2 and a third group G3 must function as buffers.

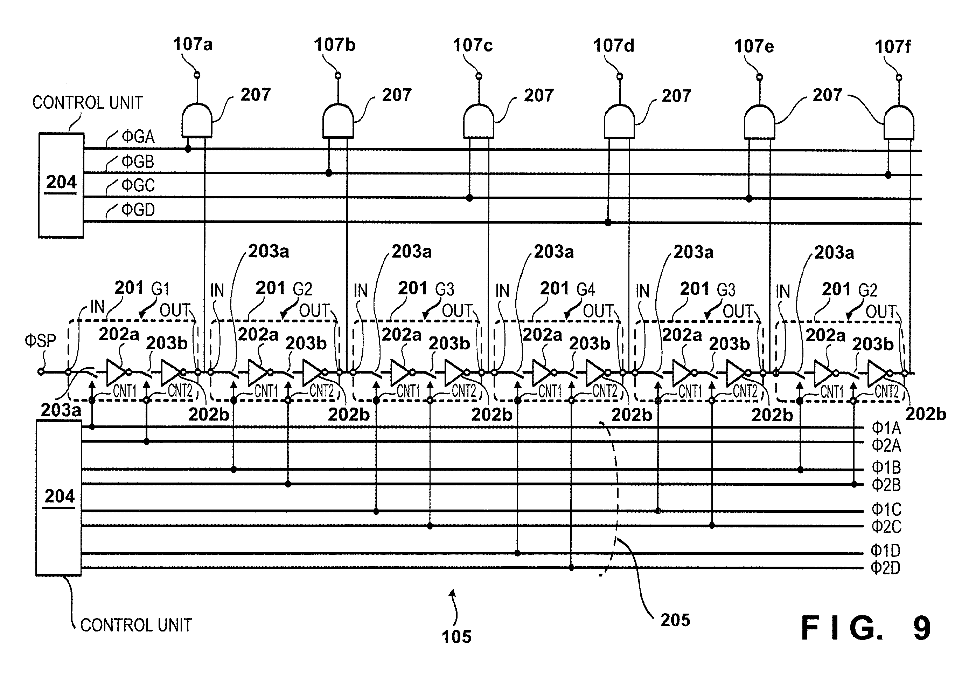

The third embodiment of the present invention will be explained below. Note that items not mentioned in the third embodiment can follow those described in the first and second embodiments. Fig. 9 shows the arrangement of a horizontal scanning circuit 105 of the third embodiment of the present invention. Note that an example in which the scanning circuit of the present invention is applied to the horizontal scanning circuit 105 will be explained below, but the scanning circuit of the present invention is also applicable to a vertical scanning circuit 108.

In the first and second embodiments, the number of output signals is reduced by synthesizing signals of a plurality of pixels and outputting the synthetic signal. In the third embodiment, the number of output signals is reduced by not outputting some signals of a plurality of pixels.

The horizontal scanning circuit 105 of the third embodiment includes gate circuits 207. The gate circuit 207 can be formed by, for example, an AND gate. In the example shown in Fig. 9, the gate circuit 207 is formed by an AND gate having two input terminals. An output control signal φGA, φGB, φGC, or φGD is supplied to one input terminal of the AND gate, and an output terminal OUT of a unit circuit 201 is connected to its other input terminal.

In a first mode, the gate circuits 207 pass all pulse signals output from a plurality of unit circuits 201 forming a shift register SR. In a 1/2 reduction mode as a sub mode of a second mode, the gate circuits 207 pass only pulse signals output from any three unit circuits 201 of the unit circuits 201 that output pulse signals in one time period. That is, in the 1/2 reduction mode as a sub mode of the second mode, the gate circuits 207 block pulse signals output from the unit circuits 201 other than the unit circuits 201 that output pulse signals in the time period.

The output control signals φGA, φGB, φGC, and φGD are supplied to the input terminals of the gate circuits 207 for the unit circuits 201 of first, second, third, and fourth groups G1, G2, G3, and G4, respectively. The output control signals φGA, φGB, φGC, or φGD can also be used to shape pulse signals, like the shaping signal in the second embodiment. That is, the output control signals φGA, φGB, φGC, or φGD can also be signals having an active time period shorter than one cycle of a clock signal CLK. In a time period during which the output control signals φGA, φGB, φGC, or φGD are at active level, output signals from the unit circuits 201 pass through the gate circuits 207.

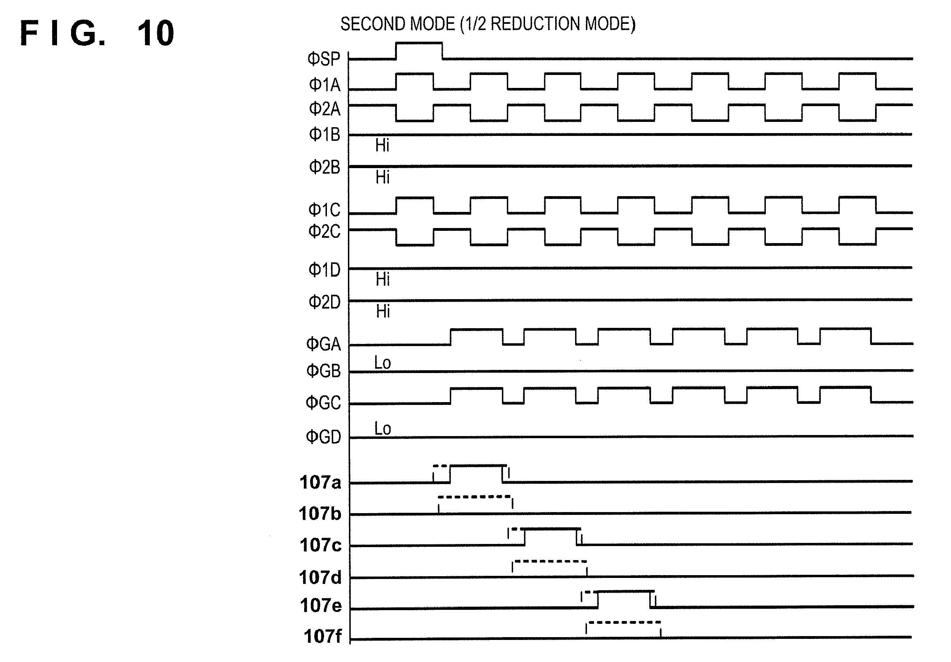

Fig. 10 is a timing chart when the horizontal scanning circuit 105 shown in Fig. 9 is operated in the 1/2 reduction mode as a sub mode of the second mode (reduction mode). In this example shown in Fig. 10, the logic level of the output control signals φGB and φGD is fixed to Low level, and the output control signals φGA and φGC are similar to the shaping signal φG of the second embodiment. Output control signals φ107a, φ107c, and φ107e sequentially change to the active level, and corresponding column readout circuits 102 are connected to a common output line 104. Consequently, a signal of one of two pixels is excluded. Therefore, the number of horizontal pixels in an output image from the solid-state image sensor 1 is reduced to 1/2.

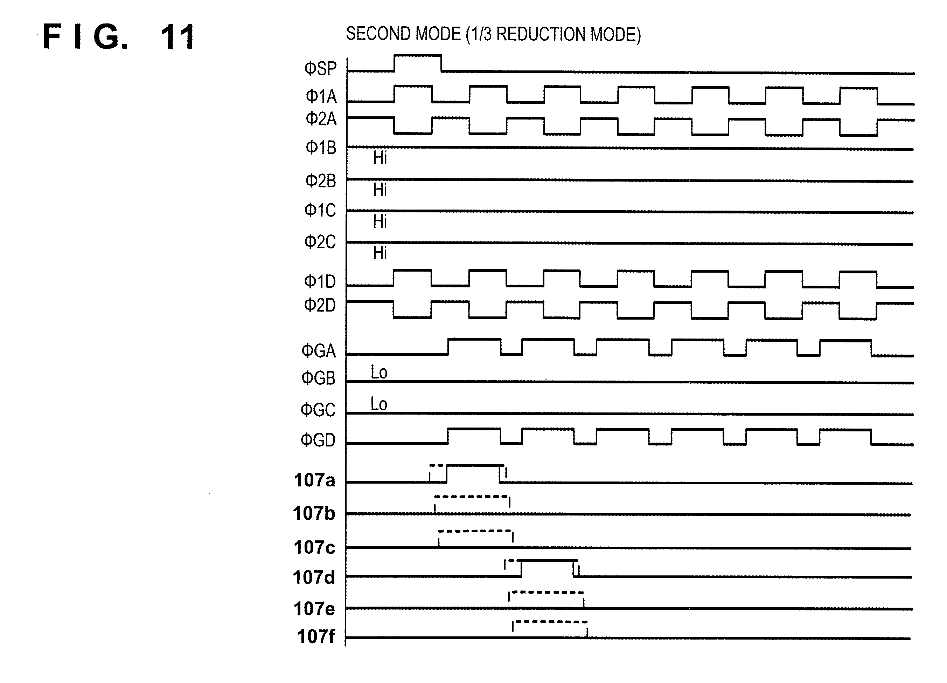

Fig. 11 is a timing chart when the horizontal scanning circuit 105 shown in Fig. 9 is operated in a 1/3 reduction mode as a sub mode of the second mode (reduction mode). In this example shown in Fig. 11, the logic level of the output control signals φGB and φGC is fixed to Low level, and the output control signals φGA and φGD are similar to the shaping signal φG of the second embodiment. The output control signal φ107a and an output control signal φ107d sequentially change to the active level, and corresponding column readout circuits 102 are connected to the common output line 104. Consequently, signals of two of three pixels are excluded. Accordingly, the number of horizontal pixels in an output image from the solid-state image sensor 1 is reduced to 1/3.

Examples of the full-pixel mode, 1/2 reduction mode, and 1/3 reduction mode have been explained through the first to third embodiments described above. However, the present invention is also applicable to other reduction ratios.

As an application example of the solid-state image sensor according to each embodiment described above, a camera incorporating the solid-state image sensor will be explained below. The concept of a camera includes not only an apparatus whose main purpose is image sensing, but also an apparatus (for example, a personal computer or portable terminal) having an image sensing function as an auxiliary function. The camera includes the solid-state image sensor according to the present invention explained in the above-mentioned embodiment, and a processing unit for processing an output signal from the solid-state image sensor. This processing unit can include an A/D converter, and a processor for processing digital data output from the A/D converter.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
A scanning circuit includes a shift register configured by connecting a plurality of unit circuits, and a control unit which controls the shift register. In a certain mode, the control unit supplies, to a control terminal of a unit circuit of at least one of a plurality of groups each constituted by the unit circuit, a logic level which operates the unit circuit of the at least one group as a buffer, and supplies the clock signal to the control terminals of unit circuits of other groups, thereby operating each of the unit circuits of the other groups to transfer a pulse signal, and outputting pulse signals from the unit circuit of the at least one group and the unit circuit arranged at the input side of it in one time period.

## Claims

1. A scanning circuit comprising a shift register configured by connecting a plurality of unit circuits in series, and a control unit which controls the shift register, wherein
each unit circuit includes an input terminal which receives a pulse signal, an output terminal which outputs a pulse signal, and a control terminal,
the plurality of unit circuits are divided into a plurality of groups,
in a first mode, the control unit supplies a clock signal to the control terminal of each unit circuit of the plurality of groups, thereby operating the plurality of unit circuits to shift a pulse signal in response to the clock signal, and
in a second mode, the control unit supplies, to the control terminal of a unit circuit of at least one of the plurality of groups, a logic level which operates the unit circuit of the at least one group as a buffer, and supplies the clock signal to the control terminals of unit circuits of other groups of the plurality of groups, thereby operating each of the unit circuits of the other groups to transfer a pulse signal output from the output terminal of a unit circuit arranged at an input side of each of the unit circuits of the other groups to the input terminal of a unit circuit arranged at an output side of each of the unit circuits of the other groups in response to the clock signal, and outputting pulse signals from the unit circuit of the at least one group and the unit circuit arranged at the input side of the at least one group, in one time period.

2. The circuit according to claim 1, further comprising a pulse-width limiting circuit configured to limit an active time period of a pulse signal output from each of the plurality of unit circuits to a time period shorter than one cycle of the clock signal.

3. The circuit according to claim 1, wherein in the second mode, the control unit supplies the logic level to the control terminal of a unit circuit of at least one of the plurality of groups in a time period including a transition timing of the clock signal but shorter than one cycle of the clock signal.

4. The circuit according to claim 1, further comprising a gate circuit,
wherein in the first mode, the gate circuit passes all pulse signals output from the plurality of unit circuits, and
in the second mode, the gate circuit passes a pulse signal output from one of unit circuits which output pulse signals in the one time period, and blocks pulse signals output from other unit circuits of the unit circuits which output pulse signals in the one time period.

5. The circuit according to any one of claims 1 to 4, wherein
the unit circuit comprises:
a first inverter;
a second inverter;
a first switch arranged between the input terminal of the unit circuit and an input terminal of the first inverter; and
a second switch arranged between an output terminal of the first inverter and an input terminal of the second inverter, and
the control terminal includes a first control terminal configured to control the first switch, and a second control terminal configured to control the second switch.

6. A solid-state image sensor comprising:
a pixel array in which a plurality of pixels are arranged to configure a plurality of rows and a plurality of columns;
a vertical scanning circuit configured to select a row as a target of signal read from the plurality of rows; and
a horizontal scanning circuit configured to select a column as a target of signal read from the plurality of columns,
wherein at least one of the vertical scanning circuit and the horizontal scanning circuit comprises a scanning circuit cited in any one of claims 1 to 5.

7. A camera comprising:
a solid-state image sensor cited in claim 6; and
a processor configured to process an output signal from the solid-state image sensor.
